# EUROPÄISCHE PATENTSCHRIFT

(11) **EP 2 507 885 B1**
(45) Veröffentlichungstag und Bekanntmachung des Hinweises auf die Patenterteilung: **17.02.2016**
(21) Anmeldenummer: 10761014.9
(22) Anmeldetag: 06.10.2010
(51) Int. Cl.: H02H 9/02, F02N 11/08

(54) **BAUELEMENT ZUR BEGRENZUNG VON STRÖMEN IN ELEKTRISCHEN SCHALTUNGEN**
DEVICE FOR LIMITING CURRENTS IN ELECTRICAL CIRCUITS
COMPOSANT DE LIMITATION DE COURANT DANS DES CIRCUITS ÉLECTRIQUES

(30) Priorität: 04.12.2009 DE 102009047497
(43) Veröffentlichungstag der Anmeldung: 10.10.2012
(73) Patentinhaber: Robert Bosch GmbH, 70442 Stuttgart (DE)
(72) Erfinder: ESCHENHAGEN, Marc, 71638 Ludwigsburg (DE); RETTIG, Rasmus, 72760 Reutlingen (DE); SCHIEMANN, Werner, 70734 Fellbach (DE); KALB, Franziska, 95686 Fichtelberg (DE); MERKLE, Michael, 70192 Stuttgart (DE)
(86) Internationale Anmeldenummer: PCT/EP2010/064887
(87) Internationale Veröffentlichungsnummer: WO 2011/067016

(56) Entgegenhaltungen:
- EP-A1- 0 461 054
- WO-A1-01/23899
- DE-A1- 10 222 162
- US-A1- 2002 080 544
- US-A1- 2006 158 810
- US-A1- 2009 058 574

## Beschreibung

### Stand der Technik

Ströme können bei Ansteigen über eine je nach Anwendungsfall bestimmte Größe (Überströmen) aufgrund von Hitzeentwicklung eine Gefährdung für die elektrische Einrichtung darstellen, in der sie auftreten. Ein Überstrom kann auch ein Hinweis auf eine Fehlfunktion des elektrischen Systems sein.

Typischerweise werden Ströme durch Sicherungen begrenzt. Diese unterbrechen den Stromkreis beim Auftreten von Überströmen und müssen nach Korrektur der Ursache des Überstroms ersetzt (Schmelzsicherung) oder durch den Benutzer wieder aktiviert werden (Schaltsicherung). Es gibt jedoch Anwendungen, bei denen sehr kurze Überstromspitzen auftreten können, obwohl keine Fehlfunktion gegeben und ein permanentes Unterbrechen des Stromkreises somit nicht angebracht ist. Ein solcher Anwendungsfall ist z.B. in Kraftfahrzeugen beim Starten des Verbrennungsmotors durch den elektrischen Anlasser gegeben. Beim Einschalten des Anlassers können durch das Einrückrelais sehr hohe Stromspitzen von einigen hundert bis über 1000 Ampere auftreten. Diese Stromspitzen sorgen für eine starke Belastung der Starterbatterie im Kraftfahrzeug sowie für Komforteinbussen durch einen Einbruch der Batteriespannung, die verschiedenste weitere elektrische Verbraucher im Kraftfahrzeug speist. Durch das Einbrechen der Batteriespannung schalten diese anderen elektrischen Verbraucher ab und müssen neustarten, sobald die Versorgungsspannung wieder im zulässigen Bereich liegt.

Ein Vorschlag zur Verbesserung ist das Takten des Stromes durch ein Anlasser-Steuergerät, wie aus der DE10222162A1 bekannt. Ein ungewünschter Nebeneffekt dieser Lösung sind jedoch elektromagnetische Störungen im Bordnetz des Kraftfahrzeuges. Außerdem ist die vorgeschlagene Lösung mit hohen Kosten verbunden.

US 2002/0080544 A1 offenbart einen Strombegrenzer mit den Merkmale des Oberbegriffs des Anspruchs 1.

Die Erfindung macht es sich daher zur Aufgabe, eine kostengünstige Vorrichtung zum unterbrechungsfreien Begrenzen eines Stromes einzuführen, die die obengenannten Nachteile überwindet.

### Offenbarung der Erfindung

Ein erster Erfindungsaspekt betrifft einen Strombegrenzer mit einem Eingang für eine Versorgungsspannungsquelle und einem Ausgang für einen Ausgabestrom. Der Strombegrenzer weist wenigstens einen Regelschaltkreis, einen Stromsensor und wenigstens einen Leistungsschalter auf. Der Stromsensor ist ausgebildet, einen Strom vom Eingang des Strombegrenzers zum Ausgang des Strombegrenzers zu messen und einen Messwert an einen Messwerteingang des Regelschaltkreises auszugeben. Der wenigstens eine Leistungsschalter ist zwischen den Eingang und den Ausgang des Strombegrenzers geschaltetet und verfügt über einen mit einem Steuerausgang des Regelschaltkreises verbundenen Steuereingang. Der Regelschaltkreis ist ausgebildet, den Strom vom Eingang des Strombegrenzers zum Ausgang des Strombegrenzers zu begrenzen, wenn der Messwert größer als ein Stromgrenzwert ist. Gemäß der Erfindung ist der Regelschaltkreis außerdem ausgebildet, den wenigstens einen Leistungsschalter im linearen Bereich zu betreiben.

Der Betrieb des Leistungsschalters im linearen Bereich minimiert die auftretenden elektromagnetischen Störungen. Besonders vorteilhaft ist es dabei, den Strom zu keinem Zeitpunkt vollständig zu unterbrechen.

Eine Strombegrenzung für elektrische Maschinen wie beispielsweise einen elektrischen Anlasser für ein Kraftfahrzeug hat eine Reihe von Vorteilen:
- Elektromagnetische Störungen werden verringert. Insbesondere der aus dem Einschalten resultierende Spannungseinbruch aufgrund der Belastung der Spannungsquelle durch den Einschaltstrom wird begrenzt. Hierdurch wird es möglich, den Aufwand für Maßnamen zur Stabilisierung zu verringern. Pufferbatterien oder -kondensatoren und nachgeschaltete DC/DC-Umsetzer für das Erzeugen einer konstanten Betriebsspannung werden überflüssig, was wiederum neben Kostenreduzierungen zu insbesondere im Fahrzeugbau vorteilhaften Gewichts- und Volumenverringerungen führt.
- Die Lebensdauer der elektrischen Maschine wird durch die Begrenzung der auftretenden Drehmomente im Start erhöht.
- Die elektrische Maschine kann leichter und preiswerter hergestellt werden. So können beispielsweise Wandstärken reduziert werden. Hierdurch sind weitere Gewichts- und Kosteneinsparungen erreichbar.
- Geräusche und Vibrationen werden verringert, was in einem Kraftfahrzeug den Komfort steigert.
- Der Startvorgang wird verbessert, indem die Startdauer eines durch die elektrische Maschine gestarteten Verbrennungsmotors reduziert wird.
- Gegenüber vergleichbaren Vorrichtungen werden Kosten, Bauraum und Gewicht minimiert, was in entsprechenden Wettbewerbsvorteilen gegenüber vorexistierenden Lösungen mündet.
- Der Strombegrenzer der Erfindung kann einfach als hochintegrierter Leistungselektronikbaustein gefertigt werden, welcher in den Anlasser oder das Einrückrelais integriert oder als Nachrüstlösung gesondert vermarktet werden kann. Dabei kann der wenigstens eine Leistungsschalter auch als zweite integrierte Schaltung aufgebaut sein.

Erfindungsgemäß ist der Regelschaltkreis ausgebildet, den wenigstens einen Leistungsschalter alternierend während einer ersten Steuerperiode mit einem ersten Steuersignal für einen Betrieb im linearen Bereich mit einem ersten Widerstandswert und während einer direkt auf die erste Steuerperiode folgenden zweiten Steuerperiode mit einem zweiten Steuersignal für einen Betrieb im linearen Bereich mit einem vom ersten Widerstandswert verschiedenen zweiten Widerstandswert anzusteuern. Auf diese Weise kann z.B. während einer Steuerperiode der Leistungsschalter vollständig oder nahezu vollständig durchgeschaltet werden, um genügend Leistung zur Verfügung zu stellen, während der anderen Steuerperiode jedoch der Strom durch Einstellen eines größeren Widerstandswertes begrenzt werden, wobei sich im Mittel ein zulässiger Stromgrenzwert ergibt.

Dabei ist der Regelschaltkreis bevorzugt ausgebildet, den Stromgrenzwert veränderlich vorzugeben und eine Dauer der ersten Steuerperiode und eine Dauer der zweiten Steuerperiode gemäß dem veränderlich vorgegebenen Stromgrenzwert anzupassen. Durch Veränderungen der Dauer der ersten und zweiten Steuerperiode kann der sich im Mittel ergebende Stromgrenzwert eingestellt werden. Ist beispielsweise der erste Widerstandswert während der ersten Steuerperiode niedriger als der zweite Widerstandswert während der zweiten Steuerperiode, so kann ein höherer Stromgrenzwert angewendet werden, indem die erste Steuerperiode verlängert und/oder die zweite Steuerperiode verkürzt wird.

Der Strombegrenzer kann mit einem Temperatursensor ausgestattet sein. Der Regelkreis kann dann ausgebildet sein, den Stromgrenzwert gemäß einer vom Temperatursensor gemessenen Temperatur vorzugeben. Durch den Temperatursensor wird es möglich, ein Kaltstart von einem Warmstart zu unterscheiden. So wird eine Zündung bei warmem Motor einfacher und schneller erfolgen als bei einem kalten Motor. Entsprechend kann für einen Warmstart ein niedrigerer Stromgrenzwert vorgegeben werden als für einen Kaltstart. Der Temperatursensor kann ggf. auch einer zusätzlichen Schutzfunktion dienen, wenn ein dauerhaft entnommener hoher, aber noch unter dem Stromgrenzwert liegender Strom eine zu starke Erhitzung des Strombegrenzers oder auch des nachgeschalteten elektrischen Verbrauchers bewirkt. In einem solchen Fall könnte der Strom für wenigstens eine gewisse Zeitspanne dauerhaft unterbrochen werden.

Der Strombegrenzer verfügt bevorzugt über eine lokale Spannungsversorgung, welche ausgebildet ist, den Regelkreis und den Stromsensor (und ggf. den Temperatursensor) mit einer Versorgungsspannung zu versorgen. Vorteilhafterweise ist die lokale Spannungsversorgung mit dem Eingang des Strombegrenzers verbunden und ausgebildet, die Versorgungsspannung aus der am Eingang des Strombegrenzers anliegenden Spannung der Versorgungsspannungsquelle zu erzeugen. Dadurch lässt sich ein Strombegrenzer mit einer minimalen Anzahl von Anschlüssen und ohne Notwendigkeit einer externen Spannungsversorgung realisieren.

Als Stromsensor können entweder eine Spannungsmessung an einem geringen, im Strompfad liegenden Widerstand oder aber ein Hall-Sensor verwendet werden. Der Stromsensor umfasst bevorzugt zwei Hall-Sensoren und ist ausgebildet, den Strom als Differenz der Ausgangssignale der zwei Hall-Sensoren zu bestimmen. Durch die differentielle Messung können Verfälschungen der Messung durch externe Magnetfelder ausgeschlossen werden. Vorzugsweise sind dabei die beiden Hall-Sensoren auf gegenüberliegenden Seiten einer Verbindungsleitung zwischen dem Eingang des Strombegrenzers und dem Ausgang des Strombegrenzers angeordnet.

Besonders bevorzugt verläuft die Verbindungsleitung entlang zweier von vier Seiten jedes der beiden Hall-Sensoren. Dadurch ergibt sich ein doppelt so starkes Nutzsignal im Stromsensor und damit eine genauere Messung, weil jeder Leitungsabschnitt einen Beitrag zum gemessenen Magnetfeld liefert. Ebenso ist es möglich, die Verbindungsleitung entlang dreier der vier Seiten jedes der beiden Hall-Sensoren, also mäander- oder S-förmig, zu führen, wobei die vierte, offene Seite der beiden Hall-Sensoren in entgegengesetzte Richtungen zeigen. Dadurch erhöht sich die Genauigkeit der Messung noch weiter.

Ein zweiter Erfindungsaspekt betrifft eine Anlasservorrichtung für ein Kraftfahrzeug mit einem Verbrennungsmotor. Erfindungsgemäß ist ein zwischen einen Eingang für eine Versorgungsspannung und einen elektrischen Anlasser geschalteter Strombegrenzer gemäß dem ersten Erfindungsaspekt vorgesehen, um den Anlasserstrom beim Starten des Motors zu begrenzen.

Ein dritter Erfindungsaspekt betrifft ein Kraftfahrzeug mit einem Verbrennungsmotor und einer Anlasservorrichtung nach dem zweiten Erfindungsaspekt.

### Kurzbeschreibung der Abbildungen

Die Erfindung wird im folgenden zum besseren Verständnis anhand einiger Abbildungen näher beschrieben. Es zeigen:
Abb. 1 ein Anlassersystem eines Kraftfahrzeuges mit einem Strombegrenzer gemäß der Erfindung;
Abb. 2 ein Blockdiagramm eines Strombegrenzers gemäß der Erfindung; und
Abb. 3 zwei Varianten eines Stromsensors für den Strombegrenzer der Erfindung in zwei Teilabbildungen.

### Ausführliche Beschreibung der Abbildungen

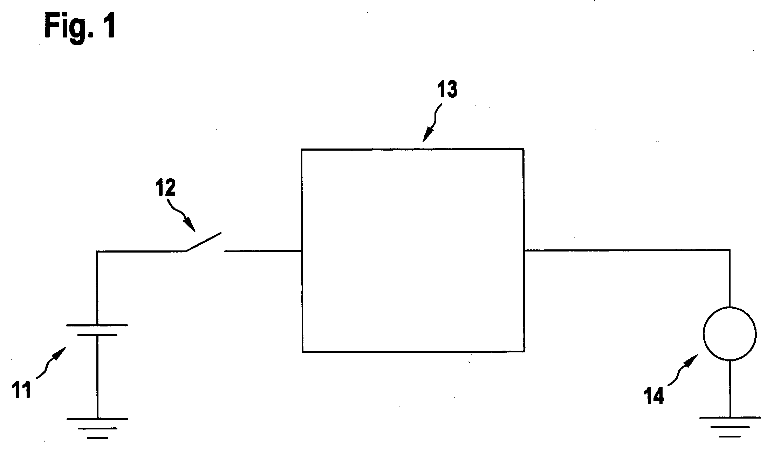

Abb. 1 zeigt ein Anlassersystem eines Kraftfahrzeuges mit einem Strombegrenzer 13 gemäß der Erfindung. Als Versorgungsspannungsquelle dient eine Anlasserbatterie 11, welche über ein Starterrelais 12 mit dem Strombegrenzer 13 verbunden ist. Der Strombegrenzer 13 ist ausgangsseitig wiederum mit dem elektrischen Anlasser 14 verbunden, welcher den (nicht dargestellten) Verbrennungsmotor startet. Soll der Verbrennungsmotor gestartet werden, wird über ein geeignetes Steuersignal das Starterrelais 12 geschlossen, so dass die Batteriespannung der Anlasserbatterie 11 dem Strombegrenzer 13 und über diesen dem elektrischen Anlasser 14 zugeführt wird, um diesen mit Elektrizität zu versorgen. Da der elektrische Anlasser 14 im Moment des Anlassens sehr große Stromspitzen verursachen kann, begrenzt der Strombegrenzer 13 den Strom, der von der Anlasserbatterie 11 zum Anlasser 14 fließt.

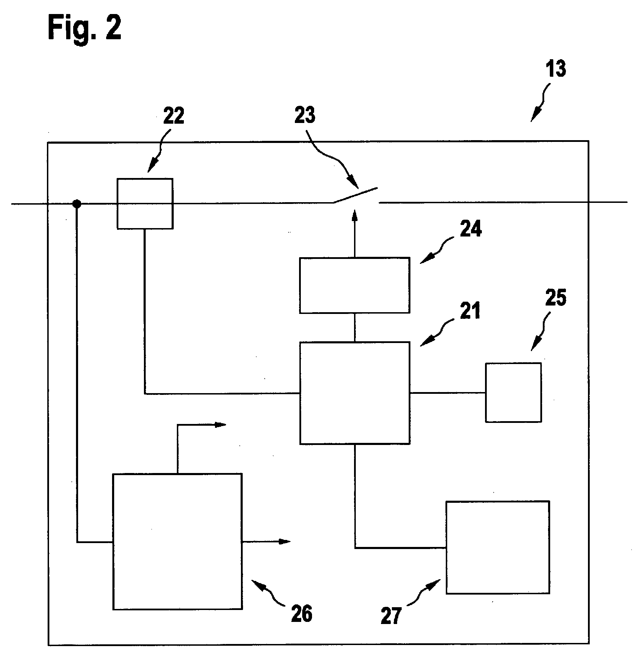

Abb. 2 zeigt ein Blockdiagramm eines Strombegrenzers 13 gemäß der Erfindung. Der Strombegrenzer 13 besitzt eine Verbindungsleitung, welche von einem Eingang des Strombegrenzers 13 zu einem Ausgang des Strombegrenzers 13 führt und in welche ein Leistungsschalter 23 geschaltet ist, welcher vorzugsweise als Leistungstransistor ausgeführt ist. Transistoren besitzen einen linearen Bereich und einen Sättigungsbereich. Im linearen Bereich kann ein Transistor als ohmscher Widerstand modelliert werden, dessen Widerstandswert über eine Steuerspannung am Gate oder der Basis des Transistors einstellbar ist. So ist es auch möglich, einen Transistor zwischen zwei verschiedenen Widerstandswerten innerhalb des linearen Bereichs zu schalten.

Neben oder um die Verbindungsleitung herum ist ein Stromsensor 22 angeordnet, der mit einem Regelschaltkreis 21 verbunden ist, an welchen er einen Messwert liefert. Der Regelschaltkreis 21 ist im abgebildeten Beispiel über eine optionale Treiberendstufe 24 mit dem Leistungsschalter 23 verbunden, die genügend elektrische Leistung zum Ansteuern des Steuereinganges des Leistungsschalters 23 zur Verfügung stellt. Außerdem ist der Regelschaltkreis 21 mit einem Temperatursensor 25 verbunden, welcher an den Regelschaltkreis 21 einen Temperaturmesswert ausgibt. Der Regelschaltkreis 21 ist ausgebildet, den durch die Verbindungsleitung fließenden Strom an die jeweiligen Umgebungsbedingungen anzupassen. So kann bei einer höheren Temperatur der Verbrennungsmotor leichter zünden, so dass auch ein geringerer Strom für den elektrischen Anlasser benötigt wird und der Stromgrenzwert entsprechend gesenkt werden kann. Der Strombegrenzer 13 kann über eine optionale Kommunikationsschnittstelle 27, beispielsweise ausgebildet, über einen CAN-Bus, einem LIN-Bus oder dergleichen mit anderen Komponenten beispielsweise einer Kraftfahrzeug-elektronik zu kommunizieren. Eine interne Spannungsversorgung 26 versorgt die verschiedenen elektrischen Blöcke des Strombegrenzers 13 mit einer lokalen Versorgungsspannung. Die interne Spannungsversorgung 26 ist mit der Verbindungsleitung verbunden und entnimmt eingangsseitig dieser die für die Erzeugung der lokalen Versorgungsspannung benötigte elektrische Energie.

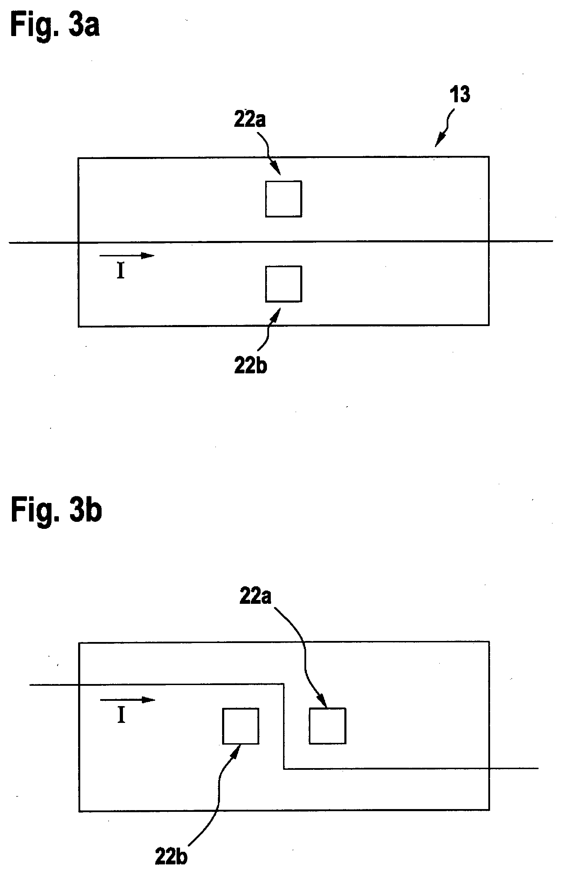

Abb. 3 zeigt zwei Varianten eines Stromsensors für den Strombegrenzer der Erfindung in zwei Teilabbildungen. In Teilabbildung a) ist ein Strombegrenzer 13 dargestellt, bei dem der Stromsensor 22 als zwei Hall-Sensoren 22a und 22b ausgeführt ist, welche auf einander gegenüberliegenden Seiten der Verbindungsleitung, durch die der Strom I von der Anlasserbatterie zum Anlasser fließt, angeordnet sind. Die Hall-Sensoren 22a und 22b bilden einen differentiellen Stromsensor, welcher gegenüber magnetischen Störfeldern unanfälliger ist. Das Ausgangssignal des differentiellen Stromsensors bildet sich als Differenz der Ausgangssignal der einzelnen Hall-Sensoren 22a und 22b.

In Teilabbildung b) wird eine verbesserte Variante des Stromsensors gezeigt. Der Stromsensor dieses Ausführungsbeispiels ist wiederum differentiell mit zwei auf gegenüberliegenden Seiten der Verbindungsleitung angeordneten Hall-Sensoren 22a und 22b ausgeführt. Im Unterschied zum Ausführungsbeispiel der Teilabbildung a) ist die Verbindungsleitung jedoch mäanderförmig um die und zwischen den Hall-Sensoren 22a und 22b hindurchgeführt, so dass sie die Hall-Sensoren 22a und 22b an zwei der vier Seiten umläuft. Die Hall-Sensoren sind im abgebildeten Beispiel in einer ersten Richtung nebeneinander angeordnet. Die Verbindungsleitung wird während eines ersten Abschnittes auf einer ersten Seite der ersten Richtung am ersten Hall-Sensor 22b vorbei- und dann in einem zweiten Abschnitt zwischen den Hall-Sensoren 22a und 22b senkrecht zum ersten Abschnitt durchgeführt. In einem dritten Abschnitt verläuft die Verbindungsleitung wiederum entlang der ersten Richtung an dem Hall-Sensor 22a auf einer der ersten Seite gegenüberliegenden zweiten Seite vorbei. Der Vorteil dieser Anordnung liegt in einer Verdopplung des Ausgangssignals des Stromsensors, welches wiederum als Differenz der Ausgangssignale der beiden Hall-Sensoren 22a und 22b gebildet wird. Die Verdopplung führt zu einer genaueren und fehlerunanfälligeren Messung des in der Verbindungsleitung fließenden Stromes. In einer Weiterführung dieses Gedankens ist es auch möglich, die Verbindungsleitung jeweils zusätzlich an den beiden nach außen weisenden Seiten der Hall-Sensoren 22a und 22b vorbeizuführen, so dass beide Hall-Sensoren 22a und 22b an drei von vier Seiten von der Verbindungsleitung umgeben sind, was eine entsprechende weitere Steigerung der Messgenauigkeit bewirkt.

## Patentansprüche

1. Ein Strombegrenzer (13) mit einem Eingang für eine Versorgungsspannungsquelle (11) und einem Ausgang für einen Ausgabestrom, der Strombegrenzer (13) wenigstens aufweisend:
einen Regelschaltkreis (21);
einen Stromsensor (22), welcher ausgebildet ist, einen Strom vom Eingang des Strombegrenzers (13) zum Ausgang des Strombegrenzers (13) zu messen und einen Messwert an einen Messwerteingang des Regelschaltkreises (21) auszugeben; und
wenigstens einen zwischen den Eingang und den Ausgang des Strombegrenzers (13) geschalteten Leistungsschalter (23), welcher über einen mit einem Steuerausgang des Regelschaltkreises (21) verbundenen Steuereingang verfügt,
wobei
- der Regelschaltkreis (21) ausgebildet ist, den Strom vom Eingang des Strombegrenzers (13) zum Ausgang des Strombegrenzers (13) zu begrenzen, wenn der Messwert größer als ein Stromgrenzwert ist, und
- der Regelschaltkreis (21) außerdem ausgebildet ist, den wenigstens einen Leistungsschalter (23) im linearen Bereich zu betreiben,
**dadurch gekennzeichnet dass**
der Regelschaltkreis (21) ausgebildet ist, den wenigstens einen Leistungsschalter (23) alternierend während einer ersten Steuerperiode mit einem ersten Steuersignal für einen Betrieb im linearen Bereich mit einem ersten Widerstandswert und während einer direkt auf die erste Steuerperiode folgenden zweiten Steuerperiode mit einem zweiten Steuersignal für einen Betrieb im linearen Bereich mit einem vom ersten Widerstandswert verschiedenen zweiten Widerstandswert anzusteuern.

2. Der Strombegrenzer (13) von Anspruch 1, bei dem der Regelschaltkreis (21) ausgebildet ist, den Stromgrenzwert veränderlich vorzugeben und eine Dauer der ersten Steuerperiode und eine Dauer der zweiten Steuerperiode gemäß dem veränderlich vorgegebenen Stromgrenzwert anzupassen.

3. Der Strombegrenzer (13) von Anspruch 2, mit einem oder mehreren Temperatursensoren (25), wobei der Regelkreis ausgebildet ist, den Stromgrenzwert gemäß einer von dem Temperatursensor (25) oder den Temperatursensoren (25) gemessenen Temperatur vorzugeben.

4. Der Strombegrenzer (13) von einem der vorhergehenden Ansprüche, mit einer lokalen Spannungsversorgung (26), welche ausgebildet ist, den Regelkreis und den Stromsensor (22) mit einer Versorgungsspannung zu versorgen, **dadurch gekennzeichnet, dass** die lokale Spannungsversorgung (26) mit dem Eingang des Strombegrenzers (13) verbunden und ausgebildet ist, die Versorgungsspannung aus der am Eingang des Strombegrenzers (13) anliegenden Spannung der Versorgungsspannungsquelle (11) zu erzeugen.

5. Der Strombegrenzer (13) von einem der vorhergehenden Ansprüche, bei dem der Stromsensor (22) zwei Hall-Sensoren (22a, 22b) umfasst und ausgebildet ist, den Strom als Differenz der Ausgangssignale der zwei Hall-Sensoren (22a, 22b) zu bestimmen.

6. Der Strombegrenzer (13) von Anspruch 5, bei dem die beiden Hall-Sensoren (22a, 22b) auf gegenüberliegenden Seiten einer Verbindungsleitung zwischen dem Eingang des Strombegrenzers (13) und dem Ausgang des Strombegrenzers (13) angeordnet sind.

7. Der Strombegrenzer (13) von Anspruch 6, bei dem die Verbindungsleitung entlang von wenigstens zwei von vier Seiten, bevorzugt drei von vier Seiten, jedes der beiden Hall-Sensoren (22a, 22b) verläuft.

8. Eine Anlasservorrichtung für ein Kraftfahrzeug mit einem Verbrennungsmotor, **gekennzeichnet durch** einen zwischen einen Eingang für eine Versorgungsspannung und einen elektrischen Anlasser geschalteten Strombegrenzer (13) nach einem der vorhergehenden Ansprüche.

9. Ein Kraftfahrzeug mit einem Verbrennungsmotor und einer Anlasservorrichtung nach Anspruch 8.

## Claims

1. Current limiter (13) having an input for a supply voltage source (11) and an output for an output current, the current limiter (13) at least comprising:
a control circuit (21);
a current sensor (22), which is designed to measure a current from the input of the current limiter (13) to the output of the current limiter (13) and to output a measurement value to a measurement value input of the control circuit (21); and
at least one power switch (23) which is connected between the input and the output of the current limiter (13) and which has a control input connected to a control output of the control circuit (21),
wherein
- the control circuit (21) is designed to limit the current from the input of the current limiter (13) to the output of the current limiter (13) if the measurement value is greater than a current limit value, and
- the control circuit (21) is additionally designed to operate the at least one power switch (23) in the linear region,
**characterized in that**
the control circuit (21) is designed to drive the at least one power switch (23) alternately during a first control period with a first control signal for operation in the linear region with a first resistance value and during a second control period, which directly succeeds the first control period, with a second control signal for operation in the linear region with a second resistance value, which is different from the first resistance value.

2. Current limiter (13) of Claim 1, wherein the control circuit (21) is designed to predefine the current limit value in a variable manner and to adapt a duration of the first control period and a duration of the second control period in accordance with the current limit value predefined in a variable manner.

3. Current limiter (13) of Claim 2, having one or a plurality of temperature sensors (25), wherein the control circuit is designed to predefine the current limit value in accordance with a temperature measured by the temperature sensor (25) or the temperature sensors (25).

4. Current limiter (13) of any of the preceding claims, having a local voltage supply (26) designed to supply the control circuit and the current sensor (22) with a supply voltage, **characterized in that** the local voltage supply (26) is connected to the input of the current limiter (13) and is designed to generate the supply voltage from the voltage of the supply voltage source (11) that is present at the input of the current limiter (13).

5. Current limiter (13) of any of the preceding claims, wherein the current sensor (22) comprises two Hall sensors (22a, 22b) and is designed to determine the current as a difference between the output signals of the two Hall sensors (22a, 22b).

6. Current limiter (13) of Claim 5, wherein the two Hall sensors (22a, 22b) are arranged on opposite sides of a connecting line between the input of the current limiter (13) and the output of the current limiter (13).

7. Current limiter (13) of Claim 6, wherein the connecting line runs along at least two of four sides, preferably three of four sides, of each of the two Hall sensors (22a, 22b).

8. Starter device for a motor vehicle having an internal combustion engine, **characterized by** a current limiter (13) according to any of the preceding claims, which is connected between an input for a supply voltage and an electrical starter.

9. Motor vehicle having an internal combustion engine and a starter device according to Claim 8.

## Revendications

1. Limiteur de courant (13) comportant une entrée destinée à une source de tension d'alimentation (11) et une sortie destinée à un courant de sortie, le limiteur de courant (13) comprenant au moins
un circuit de régulation (21) ;
un capteur de courant (22) qui est conçu pour mesurer un courant allant de l'entrée du limiteur de courant (13) à la sortie du limiteur de courant (13) et pour délivrer en sortie une valeur de mesure à une entrée de mesure du circuit de régulation (21), et
au moins un commutateur de puissance (23) connecté entre l'entrée et la sortie du limiteur de courant (13), qui possède une entrée de commande connectée à une sortie de commande du circuit de régulation (21), dans lequel
- le circuit de régulation (21) est conçu pour limiter le courant allant de l'entrée du limiteur de courant (13) à la sortie du limiteur de courant (13) lorsque la valeur de mesure est supérieure à une valeur limite du courant, et
- le circuit de régulation (21) est en outre conçu pour attaquer l'au moins un commutateur de puissance (23) dans un domaine linéaire,
**caractérisé en ce que** le circuit de régulation (21) est conçu pour commander l'au moins un commutateur de puissance (23) de manière alternée pendant une première période de commande avec un premier signal de commande destiné à une attaque dans le domaine linéaire avec une première valeur de résistance et pendant une seconde période de commande faisant directement suite à la première période de commande avec un second signal de commande destiné à effectuer une attaque dans le domaine linéaire avec une seconde valeur de résistance différente de la première valeur de résistance.

2. Limiteur de courant (13) selon la revendication 1, dans lequel le circuit de régulation (21) est conçu pour prédéterminer de manière variable la limite de courant et pour adapter une durée de la première période de commande et une durée de la seconde période de commande en fonction de la valeur limite de courant prédéterminée de manière variable.

3. Limiteur de courant (13) selon la revendication 2, comportant un ou plusieurs capteurs de température (25), dans lequel le circuit de régulation est conçu pour prédéterminer la valeur limite du courant en fonction d'une température mesurée par le capteur de température (25) ou par les capteurs de température (25).

4. Limiteur de courant (13) selon l'une quelconque des revendications précédentes, comportant une alimentation en tension locale (26) qui est conçue pour alimenter le circuit de régulation et le capteur de courant (22) avec une tension d'alimentation, **caractérisé en ce que** l'alimentation en tension locale (26) est connectée à l'entrée du limiteur de courant (13) et est conçue pour générer la tension d'alimentation à partir de la tension de la source de tension d'alimentation (11) appliquée à l'entrée du limiteur de courant (13).

5. Limiteur de courant (13) selon l'une quelconque des revendications précédentes, **caractérisé en ce que** le capteur de courant (22) comprend deux capteurs Hall (22a, 22b) et est conçu pour déterminer le courant sous la forme d'une différence entre les signaux de sortie des deux capteurs Hall (22a, 22b).

6. Limiteur de courant (13) selon la revendication 5, dans lequel les deux capteurs Hall (22a, 22b) sont disposés sur un côté opposé à une ligne de connexion entre l'entrée du limiteur de courant (13) et la sortie du limiteur de courant (13).

7. Limiteur de courant (13) selon la revendication 6, dans lequel la ligne de connexion s'étend le long d'au moins deux de quatre côtés et de préférence, le long de trois de quatre côtés, de chacun des deux capteurs Hall (22a, 22b).

8. Dispositif de démarreur destiné à un véhicule à moteur comportant un moteur à combustion interne, **caractérisé par** un limiteur de courant (13) selon l'une quelconque des revendications précédentes, connecté entre une entrée destinée à une tension d'alimentation et un démarreur électrique.

9. Véhicule à moteur comportant un moteur à combustion interne et un dispositif démarreur selon la revendication 8.
